# EUROPEAN PATENT SPECIFICATION

(11) **EP 3 336 342 B1**
(45) Date of publication and mention of the grant of the patent: **31.07.2019**
(21) Application number: 17206425.5
(22) Date of filing: 11.12.2017
(51) Int. Cl.: F02M 61/18, F02M 21/02

(54) **NOZZLE FOR FUEL VALVE FOR INJECTING FUEL INTO THE CYLINDERS OF A LARGE TURBOCHARGED TWO-STROKE COMPRESSION-IGNITED INTERNAL COMBUSTION ENGINE**
DÜSE FÜR KRAFTSTOFFVENTIL ZUR EINSPRITZUNG VON KRAFTSTOFF IN DIE ZYLINDER EINES GROSSEN TURBOGELADENEN ZWEITAKTVERBRENNUNGSMOTORS MIT KOMPRESSIONSZÜNDUNG
BUSE POUR SOUPAPE DE CARBURANT POUR INJECTER DU CARBURANT DANS LES CYLINDRES D'UN GRAND MOTEUR À COMBUSTION INTERNE À ALLUMAGE PAR COMPRESSION TURBOCOMPRESSÉ À DEUX TEMPS

(30) Priority: 13.12.2016 DK 201670986
(43) Date of publication of application: 20.06.2018
(73) Proprietor: MAN Energy Solutions, filial af MAN Energy Solutions SE, Tyskland, 2450 Copenhagen SV (DK)
(72) Inventor: Hagen, Peter, 2791 Dragoer (DK)
(74) Representative: Nordic Patent Service A/S

(56) References cited:
- EP-A1- 2 239 451
- WO-A1-91/12418
- DE-A1-102005 046 433
- JP-A- S5 569 754
- US-B1- 8 839 762

## Description

### TECHNICAL FIELD

The present disclosure relates to a nozzle for a fuel valve for injecting fuel into the cylinders of a large turbocharged two-stroke self-igniting internal combustion engine with crossheads, in particular to a nozzle for injecting gaseous or low flashpoint fuel into the cylinders of a large turbocharged two-stroke self-igniting internal combustion engine with crossheads.

### BACKGROUND

Large turbocharged two-stroke self-igniting crosshead internal combustion engine are typically used as prime movers in large ocean going ships, such as container ships or in power plants.

The cylinders of these engines are provided with a single exhaust valve centrally placed in the cylinder cover i.e. at the top of the cylinder and with a ring of piston controlled scavenge ports at the lower region of the cylinder liner. The scavenge ports are slanted in order to create a swirl in the gases in the combustion chamber.

Two or three fuel valves are disposed in the cylinder cover around the centrally placed exhaust valve, with their nozzles projecting into the combustion chamber. The fuel valves are peripherally disposed in the cylinder cover with the nozzle holes of the nozzles directed with the swirl, away from the cylinder wall and into the combustion chamber in a direction that is substantially. Occasionally, a single nozzle hole of a nozzle is directed against the swirl in the combustion chamber.

A nozzle is attached to the forward or distal end of a fuel valve. The fuel valve comprises an elongated housing with the proximal or rear end protruding from the upper surface of the cylinder cover and with the elongated fuel valve housing extending through the cylinder cover and with the nozzle at the forward or distal end of the elongated fuel valve housing projecting into the combustion chamber.

Known nozzles for large two-stroke diesel engines of the crosshead type typically have an elongated nozzle body comprising a cylindrical section with center main bore leading from the base of the nozzle at a distal end of the nozzle body to descending nozzle bores that are located at or near the tip or distal end of the nozzle bodies. The tip or distal and can be round or flat but is closed since the nozzle bores must not be directed downwardly towards the piston. Thus, the nozzle bores are laterally directed relative to the main axis of the nozzle and typically approximately to the main axis of the engine cylinder. Typically, each nozzle is provided with three to seven nozzle bores that are all connected to the main bore.

Since the nozzle body projects into the combustion chamber it is exposed to the hot gases of the combustion chamber and parts of the nozzle body will therefore reach relatively high temperatures of up to approximately 400°C. The incoming fuel is for conventional heavy fuel oil operated engines approximately 140°C. Thus, the incoming fuel in the main bore leaving the nozzle through the nozzle bores has a significantly lower temperature than the gas surrounding the outer surface of the nozzle body. Thus, the material of the nozzle body is exposed to a substantial temperature gradient, causing stresses in the material.

In recent years there has been a trend to operate large two-stroke diesel engine of the crosshead type with gaseous fuel. These fuels entered the main bore at a temperature that is substantially lower, typically approximately 50 to 80°C. Thus, these gaseous fuels expose the material the nozzle body to a significantly larger temperature gradient since the temperature of the gas in the combustion chamber is substantially unchanged.

There is also been a trend in recent years to operate large two-stroke diesel engines of the crosshead type with low flashpoint fuels. These low flashpoint fuels also enter the main bore in the nozzle a temperature of typically approximately 50 to 80°C degrees Celsius and thus these low flashpoint fuels also exposed the material of the nozzle to a larger temperature gradient when compared to heavy fuel oil.

EP2239451 discloses a fuel valve and a nozzle for injecting liquid fuel into the combustion chamber of a large two-stroke internal combustion engine according to the preamble of claim 1. A main bore extends from the base of the nozzle to the tip (distal end) of the nozzle. Nozzle holes connect to the main bore at various positions relatively close to the tip of the nozzle.

JPS5569754 discloses a fuel valve with a nozzle for maintaining an ideal condition for fuel ejection when the engine output is increasing and when it is decreasing, by providing a large needle valve, and a small needle valve which opens at a pressure lower than the pressure required for opening the large needle valve, and also providing nozzle holes corresponding to these needle valves.

The known of nozzles develops cracks between the nozzle holes due to thermal fatigue of the material when they are exposed to by high operating temperature gas in the combustion chamber and the high cooling effect of the injected fuel/gas.

The increased temperature gradient that the material of the nozzle body is exposed to for engines that are operated with gaseous fuels or low flashpoint fuels leads to an increased risk of crack formation in the nozzle body material, especially in the area of the nozzle where the nozzle holes are located.

### SUMMARY

In view of the above it is an object of the present invention to provide a nozzle for a fuel valve for injecting gaseous fuel into a large two-stroke diesel engine of the crosshead type that overcomes or at least reduce the problems mentioned above.

The foregoing and other objects are achieved by the features of the independent claims. Further implementation forms are apparent from the dependent claims, the description and the figures.

According to a first aspect, there is provided a nozzle according to claim 1.

By providing individual supply passages that extend from a medial position in the nozzle body to the nozzle holes, the thickness of the material between the nozzle bores are significantly increased and the material stresses caused by the temperature gradient between the relatively cool fuel and the hot gases in the combustion chamber are reduced and this combination significantly reduces the risk of crack formation in the nozzle body material. With separate supply passages for each nozzle hole there is more nozzle material between the nozzle holes, and thereby lower stress level around the nozzle hole perimeter. Thus, lower internal stresses in the material around the nozzle holes are achieved, thereby reducing the risk of crack formation.

According to a first possible implementation of the first aspect the nozzle holes have a nozzle axis and wherein the nozzle axes are arranged at an obtuse angle with the main direction.

According to a second possible implementation of the first aspect the supply passages extend from the main bore in a direction that is either parallel with the main direction or at an obtuse angle with the main direction.

According to a third possible implementation of the first aspect each nozzle hole is connected to a supply passage with the nozzle axle of the nozzle hole concerned at an obtuse or right angle to the supply passage concerned.

According to a fourth possible implementation of the first aspect the distal end comprises a substantially planar end surface with a preferably substantially circular outline, the end surface preferably being arranged at an acute angle with the main direction.

According to a fifth possible implementation of the first aspect the nozzle body comprises a substantially cylindrical portion extending between the base and the distal end.

According to a sixth possible implementation of the first aspect the nozzle body comprises a transition area with a rounded outer surface connecting the substantially cylindrical portion to the outline of the end surface.

According to a seventh possible implementation of the first aspect the nozzle holes are disposed in the transition area and preferably distributed around the outline of the end surface.

According to an eighth possible implementation of the first aspect the cross-sectional area of the main bore is substantially larger than the cross-sectional area of the supply passages.

According to a ninth possible implementation of the first aspect the cross-sectional area of the supply passages is substantially equal to the cross-sectional area of the nozzle holes.

According to a tenth possible implementation of the first aspect the inlet port is formed by a bore with a diameter that is larger than the diameter of the main bore.

According to an eleventh possible implementation of the first aspect the supply passages are substantially straight channels or substantially straight bores.

These and other aspects of the invention will be apparent from and the embodiments described below.

### BRIEF DESCRIPTION OF THE DRAWINGS

In the following detailed portion of the present disclosure, the invention will be explained in more detail with reference to the example embodiments shown in the drawings, in which:
Fig. 1 is an elevated view showing the fore end and one lateral side of a large two-stroke compression-ignited turbocharged engine according to an example embodiment,
Fig. 2 is an elevated view showing the aft end and the other lateral side of the engine of Fig. 1,
Fig. 3 is a diagrammatic representation the engine according to Fig. 1 with its intake and exhaust systems,
Fig. 4 is a an elevated view of a fuel valve for use in the engine of Figs. 1 to 3,
Fig. 5 is an elevated view of a nozzle for use with the fuel valve of Fig. 4,
Fig. 6 is a transparent side view of the nozzle of Fig. 5 5,
Fig. 7 is a collection of top views, cross-sectional views and longitudinal-sectional views of the nozzle of Fig. 5,
Fig. 8 is a sectional view showing the nozzle of Fig. 5 installed in a cylinder cover of the engine of Figs. 1 to 3,
Fig. 9 is a longitudinal-sectional view of the nozzle of Fig. 4, illustrating the angles between various components, and
Fig. 10 is a longitudinal-sectional view of a nozzle according to another embodiment.

### DETAILED DESCRIPTION

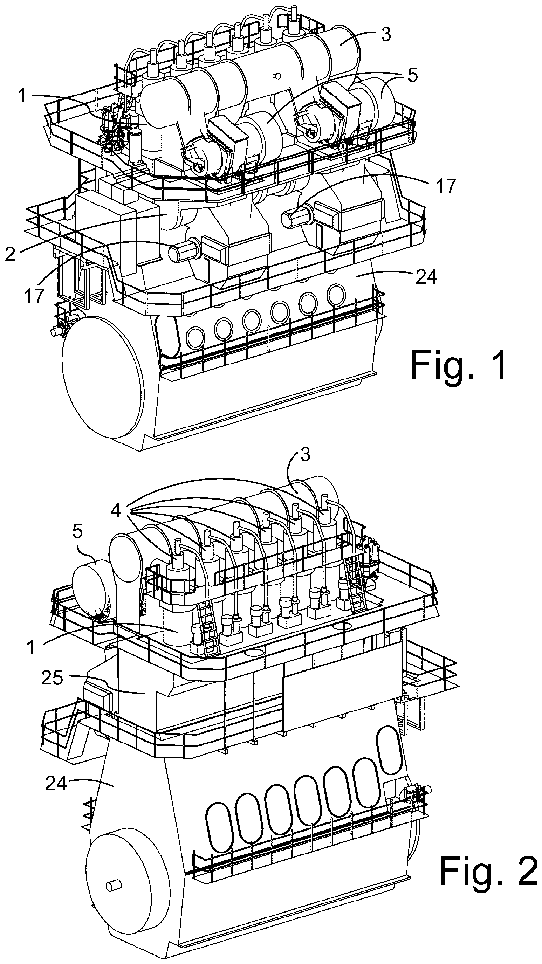

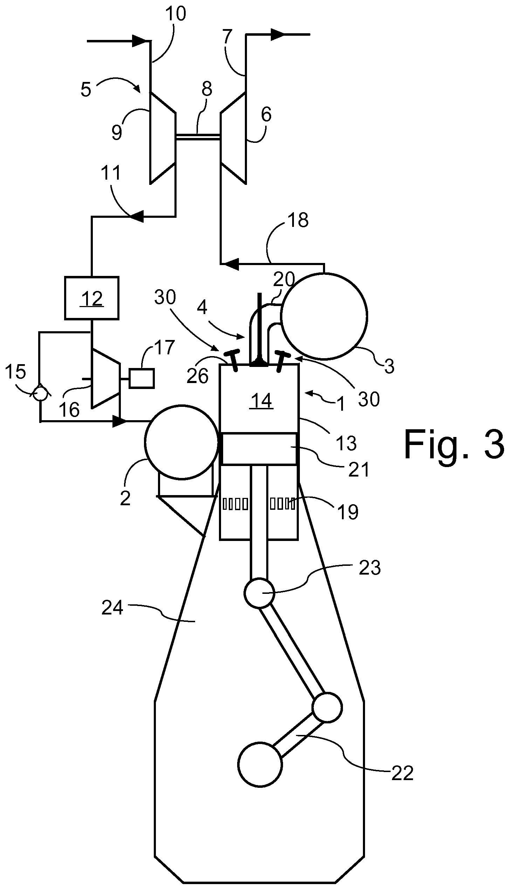

In the following detailed description, a nozzle for use with a fuel valve, and a large two stroke engine in which the nozzle and the fuel valve are used will be described by the example embodiments. Figs. 1 to 3 show a large low speed turbocharged two-stroke diesel engine with a crankshaft 22 and crossheads 23. Fig. 3 shows a diagrammatic representation of a large low speed turbocharged two-stroke diesel engine with its intake and exhaust systems. In this example embodiment the engine has six cylinders 1 in line. Large turbocharged two-stroke diesel engines have typically between five and sixteen cylinders in line, carried by an engine frame 24. The engine may e.g. be used as the main engine in an ocean going vessel or as a stationary engine for operating a generator in a power station. The total output of the engine may, for example, range from 5,000 to 110,000 kW.

The engine is a diesel (compression-igniting) engine of the two-stroke uniflow type with scavenge ports 19 in the form a ring of piston-controlled ports at the lower region of the cylinders 1 and an exhaust valve 4 at the top of the cylinders 1. Thus the flow in the combustion chamber is always from the bottom to the top and thus the engine is of the so called uniflow type. The scavenging air is passed from the scavenging air receiver 2 to the scavenging air ports 19 of the individual cylinders 1. A reciprocating piston 21 in the cylinder 1 compresses the scavenging air, fuel is injected via two or three fuel valves 30 that are arranged in the cylinder cover 26. Combustion follows and exhaust gas is generated. When an exhaust valve 4 is opened, the exhaust gas flows through an exhaust duct 20 associated with the cylinder 1 concerned into an exhaust gas receiver 3 and onwards through a first exhaust conduit 18 to a turbine 6 of the turbocharger 5, from which the exhaust gas flows away through a second exhaust conduit 7. Through a shaft 8, the turbine 6 drives a compressor 9 supplied via an air inlet 10.

The compressor 9 delivers pressurized charging air to a charging air conduit 11 leading to the charging air receiver 2. The scavenging air in the conduit 11 passes through an intercooler 12 for cooling the charging air. The cooled charging air passes via an auxiliary blower 16 driven by an electric motor 17 that pressurizes the charging air flow in low or partial load conditions to the charging air receiver 2. At higher loads the turbocharger compressor 9 delivers sufficient compressed scavenging air and then the auxiliary blower 16 is bypassed via a non-return valve 15.

The cylinders are formed in a cylinder liner 52. The cylinder liners 52 are carried by a cylinder frame 25 that is supported by the engine frame 24.

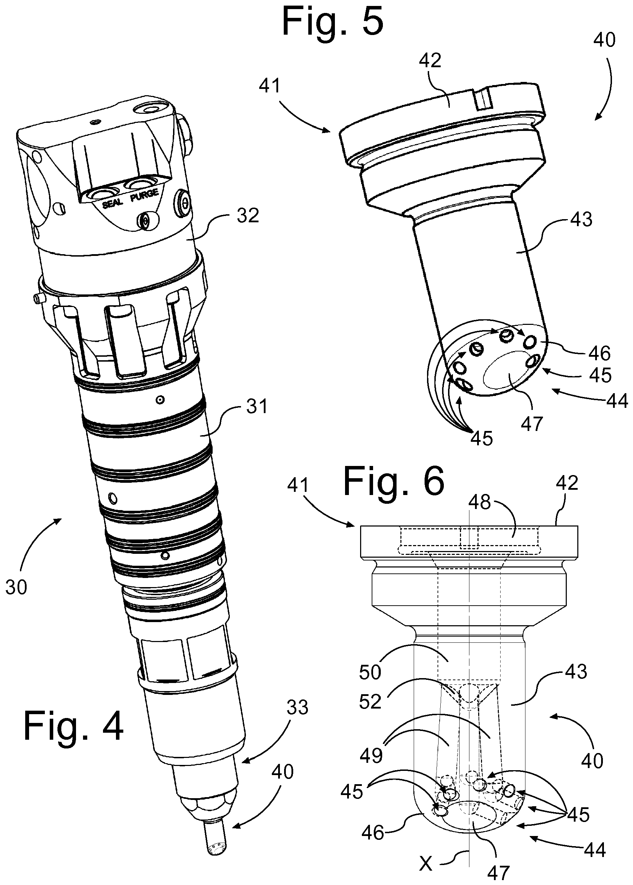

Fig. 4 shows one of the two or three fuel valves 30 that are mounted in in a through-going bore in the cylinder cover 26 with the rear end 32 of the fuel valve 30 protruding from the upper side of the cylinder cover and with the distal end (tip) of the nozzle 40 marginally protruding into the combustion chamber or being flush with the combustion chamber. The fuel valve 26 comprises a elongated fuel valve body 31 with a nozzle holder 33 at its distal (forward) end. The nozzle holder connects the nozzle 42 the elongated fuel valve body 31. Fuel, such as gaseous fuel or liquid fuel is delivered in a controlled and time manner by the fuel valve 31 to the combustion chamber 26 via the nozzle 40.

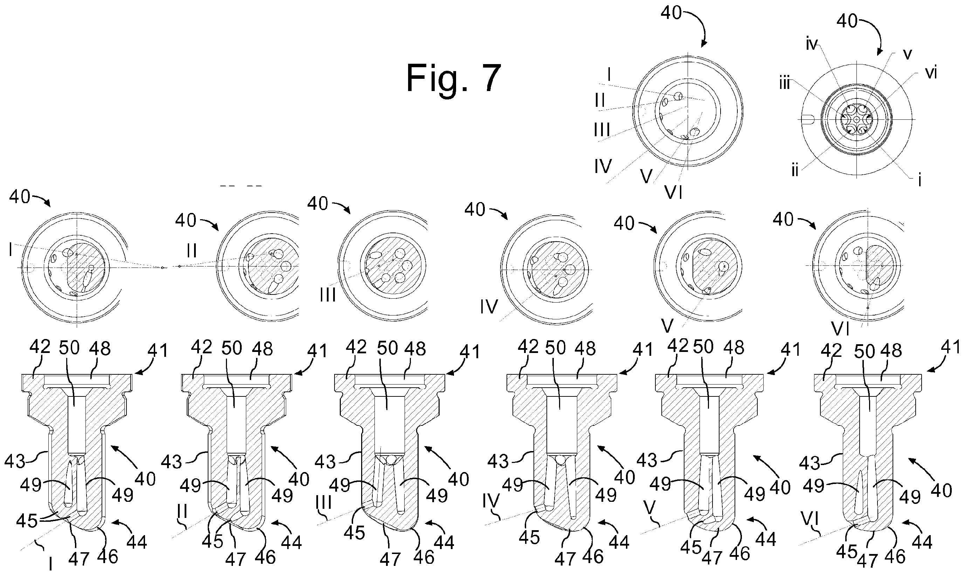

Figs. 5 to 9 illustrate an example embodiment of a nozzle 40. The nozzle 40 has a nozzle body that extends from a base 42 at a proximal end to a distal end 44 that forms the tip of the nozzle 40. A cylindrical portion 43 of the nozzle body extends from the base to the distal end 44.

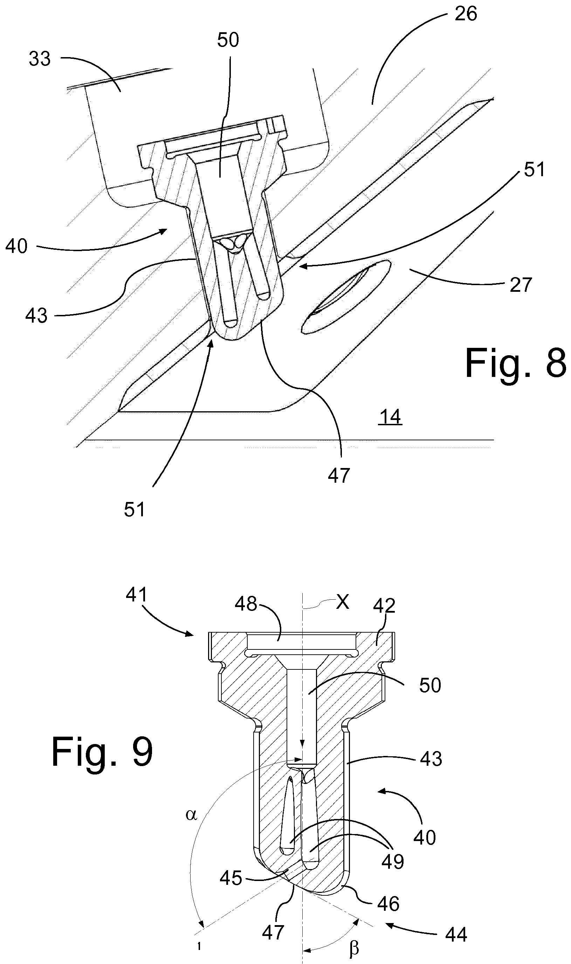

The nozzle body is made from a suitable material, e.g. a suitable alloy as well known in the art.
The distal end (tip) 44 comprises a substantially planar end surface 47 with a circular or elliptical outline. The end surface 47 connects to the cylindrical portion via a curved or rounded surface in an intermediate portion 46. The end surface 47 is arranged squint at an angle β to the main axis X. The end surface 47 is preferably centered around the main axis X. The squint angle β if selected such that it ensures that the end surface 47 is substantially parallel with the surface of the cylinder 26 cover facing the combustion chamber 14 in the area of the cylinder cover where the nozzle is disposed, as can be seen in Fig. 8.

The opening of the cover bore in which the fuel valve 26 and the nozzle 40 are disposed to the inner surface of the cylinder cover 26 is preferably rounded to provide a recessed area 51. In an embodiment the recessed area 51 connects to a cutout in the inner surface of the cylinder cover 26 for providing space for jets from the nozzle bores 45.

The distal end 44, in particular the end surface 47 is preferably substantially flush with the inner surface 27 of the cylinder cover 26 in the area where the cover bore opens to the inner surface 27.

Alternatively, the distal end 47 of the nozzle 40 only marginally protrudes from the inner surface 27 of the cylinder cover 26 into the combustion chamber 14, as shown in Fig. 8.

The nozzle 40 is provided with a plurality of nozzle holes 45. The nozzle 40 is provided with any desirable number of nozzle holes 45, preferably between two and seven nozzle holes 45 even more preferably between three and six nozzle holes 45 and most preferably five or six nozzle holes 45. The nozzle 40 according to the present example embodiment is provided with six nozzle holes 45.

Preferably, the nozzle holes 45 open to the curved or rounded surface in the intermediate portion 46, i.e. near or in the distal end 44. However, the nozzle holes 45 may also partially open to said and surface 47 or partially open to said cylindrical portion 43.

The nozzle holes 45 each have a nozzle axis I,II,III,IV,V,VI. The nozzle axis I,II,III,IV,V,VI of each of the holes 45 is arranged at an obtuse angle α with the main direction X. The obtuse angle α can be different for each of the nozzle holes 45. The radial components of each of the nozzle axis I,II,III,IV,V,VI relative to the main axis X are distributed over a circular sector with an arc less than 180 deg. preferably less than 120 deg. and even more preferable less than 110 deg. The radial components of each of the nozzle axis (I,II,III,IV,V,VI) relative to the main axis X are substantially evenly distributed over the circular section, in order to maximize the amount of nozzle body material between the individual nozzle holes 45.

The base 42 is provided with an inlet port 48 for receiving fuel from said fuel valve 26. A main bore 50 extends from said inlet port 48 into the nozzle body and into the cylindrical portion 43 in a direction along a main axis and direction X to a medial position in the nozzle body. At the medial position the main bore 50 connects to a plurality of supply individual passages 49 that are each connected to a nozzle bore 45.

The transition between the main bore 50 and the individual supply passages 49 can serve as a seat for a valve needle (is not shown) of the fuel valve 26.

The supply passages 49 are substantially evenly distributed in the cylindrical section 43 in order to have a substantially equal amount of nozzle body material between the individual supply passages 49.

The cross-sectional area of the main bore 50 is substantially larger than the cross-sectional area of the supply passages 49. The cross-sectional area of the supply passages 49 is substantially equal to the cross-sectional area of the nozzle holes 45. The supply passages are substantially straight channels or substantially straight bores.

The inlet port 48 is in an embodiment formed by a bore with a diameter that is larger than the diameter of the main bore 50. Alternatively, the inlet port 48 can have the same diameter as the main bore.

The nozzle 40 provides a wider spread of nozzle holes 45, and thus more nozzle material between the nozzle holes 45 and thus better resistance against crack formation. Further, the nozzle 40 provides uniform inlet conditions to each of the nozzle holes, for creating substantially uniform fuel jets.

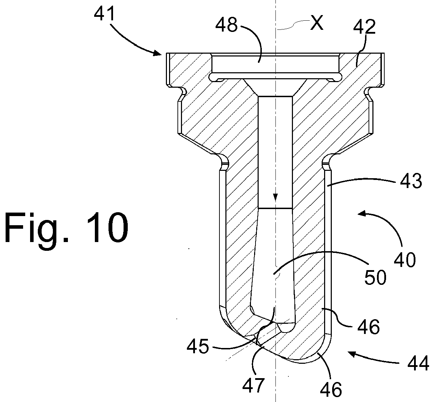

Fig. 10 illustrates another embodiment of the nozzle 40, that is essentially identical to the embodiment described above, except that the main bore 50 extends completely to the nozzle holes 45 and supplies the nozzle bores 45 directly with fuel, without any supply passages in between the main bore 50 and the nozzle holes 45.

The invention has been described in conjunction with various embodiments herein. However, other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measured cannot be used to advantage.

The reference signs used in the claims shall not be construed as limiting the scope.

## Claims

1. A nozzle (40) for a fuel valve (26) for injection of gaseous fuel into a large two-stroke turbocharged compression ignited internal combustion engine with crossheads (22), said nozzle (40) comprising:
a nozzle body extending in a main direction and axis X from a base (42) at a proximal end (41) of said nozzle body to a distal end (44) of said nozzle body, said base (42) being configured for attachment to said fuel valve (26),
a plurality of nozzle holes (45) arranged in said nozzle body at or near said distal end (44),
an inlet port (48) opening to said base (42) for receiving fuel from said fuel valve (26), and
a main bore (50) extending in said main direction X from said inlet port (48) into said nozzle body,
**characterized in that**
said main bore extends in said main direction X from said inlet port 48) into said nozzle body to a **medial** position between said proximal end (41) and said distal end (44),
with each nozzle hole (45) being fluidly connected to said main bore (50) by an individual supply passage (49) extending from said main bore (50) at said **medial** position to one of said nozzle holes (45).

2. A nozzle (40) according to claim 1, wherein said nozzle holes (45) have an nozzle axis (I,II,III,IV,V,VI) and wherein said nozzle axes(I,II,III,IV,V,VI) are arranged at an obtuse angle α with said main direction X.

3. A nozzle (40) according to claim 1 or 2, wherein said supply passages (49) extend from said main bore (50) in a direction that is either substantially parallel with said main direction X or at an obtuse angle with said main direction (X).

4. A nozzle (40) according to any one of claims 1 to 3, wherein each nozzle hole (45) is connected to a supply passage (49) with the nozzle axle (I,II,III,IV,V,VI) of the nozzle hole (45) concerned at an obtuse or right angle to the supply passage (49) concerned.

5. A nozzle (40) according to any one of claims 1 to 4, wherein said distal end (44) comprises a substantially planar end surface (47) with a preferably substantially circular or elliptical outline, said end surface (47) preferably being arranged at an acute angle β with said main direction X.

6. A nozzle (40) according to any one of claims 1 to 5, wherein said nozzle body comprises a substantially cylindrical portion (43) extending between said base (42) and said the distal end (44).

7. A nozzle (40) according to claim 6, wherein said nozzle body comprises a transition area (46) with a curved or rounded outer surface connecting said substantially cylindrical portion (43) to the outline of said end surface (47) .

8. A nozzle (40) according to claim 7, wherein said nozzle holes (45) are disposed in said transition area (46) and preferably distributed around the outline of said end surface (47).

9. A nozzle (40) according to any one of claims 1 to 8, wherein the cross-sectional area of said main bore (50) is substantially larger than the cross-sectional area of said supply passages (49).

10. A nozzle (40) according to any one of claims 1 to 9, wherein the cross-sectional area of said supply passages (49) is substantially equal to the cross-sectional area of said nozzle holes (45).

11. A nozzle (40) according to any one of claims 1 to 10, wherein said inlet port (48) is formed by a bore with a diameter that is larger than the diameter of said main bore (50) .

## Patentansprüche

1. Düse (40) für ein Brennstoffventil (26) zum Einspritzen von Brenngas in einen großen Zweitakt-Turbo-Selbstzündungs-Verbrennungsmotor mit Kreuzköpfen (22), wobei die Düse (40) Folgendes aufweist:
einen Düsenkörper, der sich in einer Hauptrichtung und Achse X von einer Basis (42) an einem proximalen Ende (41) des Düsenkörpers zu einem distalen Ende (44) des Düsenkörpers erstreckt, wobei die Basis (42) zum Anbringen an dem Brennstoffventil (26) ausgelegt ist, eine Vielzahl an Düsenlöchern (45), die in dem Düsenkörper an oder nahe dem distalen Ende (44) angeordnet sind,
eine Einlassöffnung (48), die sich zu der Base (42) zum Aufnehmen von Brennstoff von dem Brennstoffventil (26) öffnet, und
eine Hauptbohrung (50), die sich in der Hauptrichtung X von der Einlassöffnung (48) in den Düsenkörper erstreckt,
**gekennzeichnet dadurch, dass**
sich die Hauptbohrung (50) in der Hauptrichtung X von der Einlassöffnung (48) in den Düsenkörper zu einer Mittenposition zwischen dem proximalen Ende (41) und dem distalen Ende (44) erstreckt,
wobei das Düsenloch (45) fluidtechnisch über einen individuellen Zuleitungsdurchgang (49), der sich von der Hauptbohrung (50) an der Mittenposition zu einem der Düsenlöcher (45) erstreckt, mit der Hauptbohrung (50) verbunden ist.

2. Düse (40) nach Anspruch 1, wobei die Düsenlöcher (45) eine Düsenachse (I,II,III,IV,V,VI) aufweisen, und wobei die Düsenachsen (I,II,III,IV,V,VI) in einem stumpfen Winkel α zu der Hauptrichtung X angeordnet sind.

3. Düse (40) nach Anspruch 1 oder 2, wobei sich die Zuleitungsdurchgänge (49) von der Hauptbohrung (50) in einer Richtung erstreckt, die entweder im Wesentlichen parallel zu der Hauptrichtung X ist oder in einem stumpfen Winkel zu der Hauptrichtung (X) ist.

4. Düse (40) nach einem der Ansprüche 1 bis 3, wobei jedes Düsenloch (45) mit einem Zuleitungsdurchgang (49) verbunden ist, wobei die Düsenachse (I,II,III,IV,V,VI) des betroffenen Düsenlochs (45) in einem stumpfen oder rechten Winkel zu dem betroffenen Zuleitungsdurchgang (49) ist.

5. Düse (40) nach einem der Ansprüche 1 bis 4, wobei das distale Ende (44) eine im Wesentlichen planare Endfläche (47) mit einem bevorzugt im Wesentlichen kreisförmigen oder elliptischen Umriss aufweist, wobei die Endfläche (47) bevorzugt in einem spitzen Winkel β zu der Hauptrichtung X angeordnet ist.

6. Düse (40) nach einem der Ansprüche 1 bis 5, wobei der Düsenkörper einen im Wesentlichen zylindrischen Abschnitt (43) aufweist, der sich zwischen der Basis (42) und dem distalen Ende (44) erstreckt.

7. Düse (40) nach Anspruch 6, wobei der Düsenkörper einen Übergangsbereich (46) mit einer gekrümmten oder gerundeten Außenfläche aufweist, die den im Wesentlichen zylindrischen Abschnitt (43) mit dem Umriss der Endfläche (47) verbindet.

8. Düse (40) nach Anspruch 7, wobei die Düsenlöcher (45) in dem Übergangsbereich (46) angeordnet sind und bevorzugt um den Umriss der Endfläche (47) verteilt sind.

9. Düse (40) nach einem der Ansprüche 1 bis 8, wobei der Querschnittsbereich der Hauptbohrung (50) im Wesentlichen größer als der Querschnittsbereich der Zuleitungsdurchgänge (49) ist.

10. Düse (40) nach einem der Ansprüche 1 bis 9, wobei der Querschnittsbereich der Zuleitungsdurchgänge (49) im Wesentlichen gleich dem Querschnittsbereich der Düsenlöcher (45) ist.

11. Düse (40) nach einem der Ansprüche 1 bis 10, wobei die Einlassöffnung (48) durch eine Bohrung mit einem Durchmesser gebildet ist, der größer als der Durchmesser der Hauptbohrung (50) ist.

## Revendications

1. Buse (40) pour soupape de carburant (26) pour l'injection de carburant gazeux dans le cylindre d'un grand moteur à combustion interne à allumage par compression turbocompressé à deux temps (22), ladite buse (40) comprenant :
un corps de buse s'étendant dans un sens principal et un axe X depuis une base (42) à une extrémité proximale (41) dudit corps de bus jusqu'à une extrémité distale (44) dudit corps de buse, ladite base (42) étant conçue pour être fixée à ladite soupape de carburant (26),
une pluralité de trous de buse (45) pratiqués dans ledit corps de buse ou près de ladite extrémité distale (44), un port d'admission (48) ouvrant sur ladite base (42) pour recevoir du carburant en provenance de ladite soupape de carburant (26), et
un alésage principal (50) s'étendant dans ledit sens principal X depuis ledit port d'admission (48) jusque dans ledit corps de buse,
**caractérisée en ce que**
ledit alésage principal (50) s'étend dans ledit sens principal X depuis ledit port d'admission (48) jusque dans ledit corps de buse jusqu'à une position médiale entre ladite extrémité proximale (41) et ladite extrémité distale (44),
chaque trou de buse (45) étant connecté au niveau fluidique audit trou principal (50) par un passage d'alimentation individuel (49) s'étendant depuis ledit trou principal (50) ladite position médiale jusqu'à l'un desdits trous de buse (45).

2. Buse (40) selon la revendication 1, dans laquelle lesdits trous de buse (45) ont un axe de buse (I,II,III,IV,V,VI) et lesdits axes de buse (I,II,III,IV,V,VI) sont disposés en décrivant un angle obtus α par rapport audit sens principal X.

3. Buse (40) selon la revendication 1 ou 2, dans laquelle lesdits passages d'alimentation (49) s'étendent depuis ledit trou principal (50) dans un sens qui est soit substantiellement parallèle audit sens principal X, soit décrit un angle obtus par rapport audit sens principal (X).

4. Buse (40) selon l'une quelconque des revendications 1 à 3, dans laquelle chaque trou de buse (45) est connecté à un passage d'alimentation (49) avec l'axe de buse (I,II,III,IV,V,VI) du trou de buse (45) concerné décrivant un angle obtus ou droit par rapport au passage d'alimentation (49) concerné.

5. Buse (40) selon l'une quelconque des revendications 1 à 4, dans laquelle ladite extrémité distale (44) comprend une surface terminale substantiellement planaire (47) dotée d'un contour de préférence substantiellement circulaire ou elliptique, ladite surface terminale (47) étant de préférence disposée suivant un angle aigu β par rapport audit sens principal X.

6. Buse (40) selon l'une quelconque des revendications 1 à 5, dans laquelle ledit corps de buse comprend une section substantiellement cylindrique (43) s'étendant entre ladite base (42) et ladite extrémité distale (44) .

7. Buse (40) selon la revendication 6, dans laquelle ledit corps de buse comprend une zone de transition (46) dotée d'une surface extérieure courbée ou arrondie connectant ladite section substantiellement cylindrique (43) au contour de ladite surface terminale (47).

8. Buse (40) selon la revendication 7, dans laquelle lesdits trous de buse (45) sont pratiqués dans ladite zone de transition (46) et de préférence répartis autour du contour de ladite surface terminale (47).

9. Buse (40) selon l'une quelconque des revendications 1 à 8, dans laquelle la superficie de section transversale dudit trou principale (50) est sensiblement plus étendue que la superficie de section transversale desdits passages d'alimentation (49).

10. Buse (40) selon l'une quelconque des revendications 1 à 9, dans laquelle la superficie de section transversale desdits passages d'alimentation (49) est sensiblement plus étendue que la superficie de section transversale desdits trous de buse (45).

11. Buse (40) selon l'une quelconque des revendications 1 à 10, dans laquelle ledit port d'admission (48) est formé d'un trou ayant un diamètre qui est supérieur au diamètre dudit trou principal (50).
